# FASCICULE DE BREVET EUROPEEN

(11) **EP 0 554 931 B1**
(45) Date de publication et mention de la délivrance du brevet: **04.10.2001**
(21) Numéro de dépôt: 93200159.7
(22) Date de dépôt: 25.01.1993
(51) Int. Cl.: C08F 214/18

(54) **Matériaux plastiques formés de copolymères hétérogènes de fluorure de vinylidène et de chlortrifluoréthylène**
Plastikmaterialien aus heterogenen Vinylidene-Fluoride-Copolymeren und Chlortrifluorethylen
Plastic materials made of heterogeneous copolymers of vinylidine fluoride and of chlortrifluorethylene

(30) Priorité: 05.02.1992 BE 9200123
(43) Date de publication de la demande: 11.08.1993
(73) Titulaire: SOLVAY (Société Anonyme), 1050 Bruxelles (BE)
(72) Inventeur: Metz, Jean-Yves, B-1090 Bruxelles (BE); Plissart, Paul, B-1040 Bruxelles (BE)
(74) Mandataire: Dufrasne, Eugène

(56) Documents cités:
- EP-A- 0 280 591
- US-A- 2 752 331
- CHEMICAL ABSTRACTS, vol. 86 Columbus, Ohio, US; abstract no. 122251d,

## Description

La présente invention concerne de nouveaux matériaux plastiques formés de copolymères hétérogènes de fluorure de vinylidène et de chlortrifluoréthylène présentant un compromis optimal entre la température de fusion et la souplesse et leur utilisation, ainsi qu'un procédé pour fabriquer les copolymères hétérogènes.

Le polyfluorure de vinylidène est un polymère connu, notamment, pour son inertie chimique et sa résistance aux rayons ultraviolets élevées associées à une excellente résistance mécanique. Il présente néanmoins l'inconvénient de manquer de souplesse, ce qui limite ses utilisations dans des domaines où cette propriété est exigée, tels que par exemple les matériaux tubulaires destinés à être enroulés ou les gaines pour câbles électriques.

Il est connu d'améliorer la souplesse du polyfluorure de vinylidène (PVDF) par incorporation de motifs monomériques dérivés de comonomères halogénés tels que, par exemple, le chlortrifluoréthylène.

Dans la demande de brevet JA-A-51149392 (KUREHA), on divulgue la fabrication de copolymères thermoplastiques homogènes du fluorure de vinylidène (VF₂) et du chlortrifluoréthylène (CTFE), contenant de l'ordre de 2 à 15 % en poids de chlortrifluoréthylène, par copolymérisation avec injection différée et modulée de CTFE dans la totalité du VF₂, de manière à tenir compte de la réactivité relative du VF₂ et du CTFE. Les copolymères homogènes résultants présentent une souplesse accrue par rapport au PVDF, mais leur température de fusion est nettement plus faible que celle du PVDF, ce qui constitue un inconvénient sérieux.

Dans la demande de brevet EP-A-0280591 (ATOCHEM), on décrit des copolymères hétérogènes de VF₂ et de CTFE contenant globalement de l'ordre de 5 à 15 % en poids de CTFE qui présentent des points de fusion plus élevés que les copolymères homogènes correspondants à même teneur en CTFE. Ces copolymères hétérogènes sont caractérisés essentiellement en ce que la structure hétérogène des particules est formée de nodules d'un élastomère copolymère homogène de VF₂ et de CTFE représentant de 55 à 10 % en poids de la totalité du copolymère hétérogène, dispersés dans une matrice, et chimiquement liés à elle, formée d'un quasi polymère du fluorure de vinylidène représentant environ 45 à 90 % en poids de la totalité du copolymère hétérogène. L'hétérogénéité des copolymères de VF₂-CTFE de l'art antérieur provient donc essentiellement de la dispersion dans une matrice formée de quasi polymère du fluorure de vinylidène de nodules d'élastomère copolymère de VF₂-CTFE homogène. La fabrication de tels copolymères hétérogènes comprend nécessairement deux étapes de polymérisation, à savoir une étape de copolymérisation de VF₂ et de CTFE effectuée impérativement sous injection différée et modulée de CTFE et une étape distincte au cours de laquelle on polymérise essentiellement du VF₂. Pareil procédé de copolymérisation nécessite des installations pourvues de dispositifs pour l'injection différée et régulée de CTFE. Par ailleurs, il a été observé que les copolymères hétérogènes de l'art antérieur ne présentent pas un compromis optimal entre la température de fusion et la souplesse.

La présente invention vise à procurer de nouveaux matériaux plastiques formés de nouveaux copolymères hétérogènes de VF₂ et de CTFE qui présentent une température de fusion plus élevée que les copolymères hétérogènes connus à même teneur en CTFE et, par ailleurs, une température de fusion plus élevée à même niveau de souplesse. Elle concerne également un procédé pour la fabrication des nouveaux copolymères hétérogènes de VF₂ et de CTFE.

A cet effet, l'invention procure de nouveaux matériaux plastiques formés de copolymères hétérogènes de fluorure de vinylidène et de chlortrifluoréthylène, caractérisés en ce qu'ils sont constitués de nodules élastomériques de copolymères hétérogènes de fluorure de vinylidène et de chlortrifluoréthylène, représentant plus de 55 % en poids du matériau plastique, dispersés dans une phase continue cristalline de quasi polymère du fluorure de vinylidène représentant au moins environ 10 % en poids du matériau plastique.

Par nodules élastomériques de copolymères hétérogènes de VF₂ et de CTFE, on entend désigner aux fins de la présente invention la fraction du matériau plastique extraite par trempage d'une coupe microtomique d'une épaisseur de 0,1 µm dans la méthyléthylcétone à température ambiante pendant 16 heures. Cette fraction, qui constitue la phase élastomérique contenant la quasi totalité du CTFE du matériau plastique, est constituée essentiellement de copolymères hétérogènes de VF₂ et de CTFE, i.e. de copolymères dont les chaînes polymériques n'ont pas toutes la même teneur en CTFE.

La fraction volumique des nodules élastomériques est évaluée par analyse d'image (digitalisation) de micrographies réalisées après trempage de coupes microtomiques dans les conditions précitées. La fraction volumique des nodules élastomériques ainsi évaluée est assimilée à la fraction massique desdits nodules.

La taille des nodules élastomériques dispersés dans la phase continue cristalline des matériaux plastiques selon l'invention est généralement comprise entre 0,05 et 1,5 µm.

Par quasi polymère du fluorure de vinylidène, on entend désigner aux fins de la présente invention, la fraction du matériau plastique non extraite par trempage d'une coupe microtomique d'une épaisseur de 0,1 µm dans la méthyléthylcétone à température ambiante pendant 16 heures. Cette fraction, qui constitue la phase continue cristalline du matériau plastique, est constituée essentiellement de quasi polymère du fluorure de vinylidène, i.e. de polymère du VF₂ dont les chaînes polymériques sont constituées essentiellement de VF₂. Elles peuvent contenir en outre de petites quantités de CTFE.

Les matériaux plastiques formés de copolymères hétérogènes de VF₂ et de CTFE selon l'invention se distinguent donc essentiellement des matériaux précités de l'art antérieur en ce que, d'une part, les nodules élastomériques sont constitués de copolymères hétérogènes de VF₂ et de CTFE et, d'autre part, en ce que la teneur en nodules élastomériques est supérieure à 55 % en poids ou autrement dit, en ce que la teneur en quasi polymère du fluorure de vinylidène ne dépasse pas 45 % en poids.

La teneur relative en nodules élastomériques et donc la souplesse des matériaux plastiques selon l'invention croissent avec leur teneur globale en CTFE. Des matériaux plastiques préférés sont ceux dans lesquels les nodules élastomériques représentent plus de 60 % en poids et, plus particulièrement encore plus de 65 % en poids du poids total.

S'il est vrai qu'à même teneur globale en CTFE, les copolymères hétérogènes constitutifs des matériaux plastiques selon l'invention présentent une souplesse légèrement inférieure à celles des copolymères hétérogènes de l'art antérieur, ils présentent par ailleurs un compromis optimal entre la température de fusion et la souplesse qui ne peut être atteint par les copolymères hétérogènes connus.

Suivant un autre aspect de la présente invention, les matériaux plastiques formés de copolymères hétérogènes de fluorure de vinylidène et de chlortrifluoréthylène contiennent globalement de 10 à 22 % en poids environ de CTFE et présentent une température de fusion (déterminée par analyse thermique différentielle) au moins égale à 165°C et un module d'élasticité en flexion (déterminé selon la norme ASTM D 790) au plus égal à 1000 MPa. Ces matériaux plastiques contiennent généralement plus de 55 % en poids de nodules élastomériques.

Des matériaux plastiques préférés sont ceux formés de copolymères hétérogènes contenant globalement de 12 à 20 % en poids environ de CTFE qui présentent une température de fusion au moins égale à 165°C et un module d'élasticité en flexion au plus égal à 750 MPa. Ces matériaux plastiques préférés contiennent généralement plus de 60 % en poids de nodules élastomériques.

Des matériaux plastiques tout particulièrement préférés sont ceux formés de copolymères hétérogènes contenant globalement de 14 à 17 % en poids environ de CTFE qui présentent une température de fusion au moins égale à 165°C et un module d'élasticité en flexion au plus égal à 650 MPa. Ces matériaux plastiques particulièrement préférés contiennent généralement plus de 65 % en poids de nodules élastomériques.

On donne par ailleurs la préférence aux matériaux plastiques formés de copolymères hétérogènes de VF₂ et de CTFE dont le module d'élasticité est au moins égal à 150 MPa et, plus particulièrement encore au moins égal à 200 MPa.

Des matériaux plastiques tout particulièrement préférés sont ceux formés de copolymères hétérogènes de VF₂ et de CTFE qui contiennent globalement de 14 à 17 % en poids environ de CTFE et présentent une température de fusion au moins égale à 165°C et un module d'élasticité en flexion compris entre 650 et 200 MPa. Ces derniers matériaux plastiques tout particulièrement préférés présentent une température de fragilisation (mesurée selon la norme ASTM D 746 A) située aux environs de -40°C.

La présente invention concerne également un procédé pour la fabrication des copolymères hétérogènes de VF₂ et de CTFE constitutifs des matériaux plastiques selon l'invention. Ces copolymères hétérogènes peuvent être produits par un procédé simplifié, en une étape, rendant totalement superflues des installations pour l'introduction modulée de CTFE en cours de copolymérisation.

A cet effet, l'invention concerne également un procédé pour la fabrication des copolymères hétérogènes par copolymérisation de VF₂ et de CTFE, caractérisé en ce que le VF₂ et le CTFE sont copolymérisés en dispersion aqueuse à l'intervention d'initiateurs de polymérisation radicalaire avec mise en oeuvre de la totalité des deux comonomères au départ de la copolymérisation.

Un aspect essentiel du procédé de fabrication des copolymères hétérogènes réside dans la mise en oeuvre de la totalité des deux comonomères au départ de la copolymérisation.

Par copolymérisation en dispersion aqueuse, on entend désigner toutes les techniques de polymérisation usuelles dans lesquelles les (co)monomères sont dispersés dans une phase aqueuse liquide, telles que la polymérisation dite en émulsion aqueuse, laquelle s'effectue à l'intervention d'initiateurs radicalaires hydrosolubles et en présence d'agents émulsionnants et la polymérisation dite en suspension aqueuse laquelle s'effectue à l'intervention d'initiateurs radicalaires olésolubles et en présence d'agents dispersants. On donne la préférence à la copolymérisation en suspension aqueuse. On peut initier la polymérisation en suspension aqueuse à l'intervention des initiateurs oléosolubles usuels de la polymérisation radicalaire. Des exemples représentatifs de tels initiateurs sont les peroxydicarbonates de dialkyles, le peroxyde d'acétylcyclohexanesulfonyle, le peroxyde de dibenzoyle, le peroxyde de dicumyle, les perbenzoates de t-alkyle et les perpivalates de t-alkyle. On donne néanmoins la préférence aux peroxydicarbonates de dialkyles, tels que les peroxydicarbonates de diéthyle, de dipropyle et de di-isopropyle, et aux perpivalates de t-alkyle, tels que les perpivalates de t-butyle et de t-amyle et, plus particulièrement encore aux peroxydicarbonates de dialkyles.

L'initiateur peut être mis en oeuvre en totalité au départ de la copolymérisation ou par portions ou en continu en cours de la copolymérisation. La quantité d'initiateur oléosoluble est généralement comprise entre environ 0,05 et 3 % en poids par rapport aux monomères mis en oeuvre.

L'agent dispersant mis en oeuvre à la polymérisation en suspension aqueuse peut également être choisi indifféremment parmi les agents dispersants usuels utilisés à la polymérisation radicalaire dans un milieu aqueux de mise en suspension, tels que, par exemple, les alcools polyvinyliques et les éthers cellulosiques hydrosolubles, tels que les alkyl- et les alkylhydroxy-alkyl-celluloses. On donne néanmoins la préférence aux éthers cellulosiques hydrosolubles. A titre d'exemples de pareils éthers cellulosiques, on peut mentionner les méthylcelluloses, les éthylhydroxyéthylcelluloses et les méthylhydroxypropylcelluloses.

La copolymérisation peut s'effectuer en présence d'agents régulateurs de masse moléculaire. A titre d'exemples de tels régulateurs connus et utilisables pour la copolymérisation en suspension aqueuse du VF₂ et du CTFE, on peut mentionner les cétones contenant de trois à quatre atomes de carbone, les alcools saturés contenant de trois à six atomes de carbone, les carbonates de bis(alkyle) dont les groupements alkyles contiennent cinq atomes de carbone au plus. Lorsqu'on met en oeuvre un agent régulateur de masse moléculaire, celui-ci est mis en oeuvre en des quantités usuelles. Pour fixer les idées, les agents régulateurs de masse moléculaires sont généralement mis en oeuvre à raison d'environ 0,5 à 5 % en poids par rapport aux comonomères mis en oeuvre.

La température de polymérisation se situe habituellement entre 35 et 100°C. Dans cette gamme de températures, on se trouve au-dessus de la température critique (30,1°C) du fluorure de vinylidène. De préférence, on effectue la copolymérisation dans un milieu aqueux de mise en suspension à une température comprise entre 40 et 70°C et sous des pressions initiales d'environ 55 à 200 bars. On peut, bien entendu augmenter la productivité des réacteurs en procédant en cours de polymérisation à des injections d'eau ou à une élévation de la température de copolymérisation. Il est souhaitable de ne pas arrêter la copolymérisation avant que le taux de conversion n'ait atteint 80 % et, de préférence pas avant qu'il n'ait atteint 90 %.

La teneur en CTFE du mélange de comonomères mis en oeuvre au départ de la copolymérisation dépendra bien entendu essentiellement de la teneur en CTFE souhaitée dans le copolymère hétérogène VF₂-CTFE, étant entendu que la composition du copolymère se rapprochera d'autant plus de la composition du mélange de comonomères mis en oeuvre que le taux de conversion sera élevé. Généralement, le mélange de comonomères mis en oeuvre en totalité au départ de la copolymérisation contient entre 10 et 22 % en poids environ de CTFE.

Les copolymères hétérogènes de VF₂ et de CTFE obtenus selon le procédé de l'invention sont isolés, en fin de polymérisation, de manière conventionnelle par essorage, suivi de lavage et de séchage. Ils présentent généralement un indice de fluidité ("melt index") selon la norme ASTM D 1238 allant d'environ 0,5 à 50 g/10 min à 230°C sous une charge de 5 kg. Ils présentent, de préférence, un indice de fluidité allant d'environ 2 à 25 g/10 min.

Les matériaux plastiques formés de copolymères hétérogènes de VF₂ et de CTFE selon l'invention allient une souplesse et une température de fusion élevées à une température de fragilisation basse, ce qui assure aux articles souples façonnés à leur intervention une large gamme de températures d'utilisation. Ils sont dès lors utilisables dans de nombreux domaines et, en particulier, pour le gainage de câbles électriques et de fibres optiques, pour la fabrication de tubes et de matériaux tubulaires souples destinés à être enroulés, pour le revêtement de réservoirs de stockage et de transport, pour l'extrusion de films, mono- ou multicouches, agricoles ou architecturaux, etc.

La présente invention concerne également l'utilisation des matériaux plastiques formés de copolymères hétérogènes de VF₂ et de CTFE selon l'invention dans les quatres domaines d'utilisation précités.

Les exemples qui suivent sont destinés à illustrer l'invention.

### Exemple 1

Dans un autoclave d'un volume de 3,86 litres muni d'un système d'agitation, on introduit 2 1 d'eau déminéralisée, 80 ml d'une solution aqueuse d'éthylhydroxyéthylcellulose à 10g/l. Le contenu de l'autoclave est purgé d'oxygène par une succession de mises sous vide (pression résiduelle : environ 50 mbar) et de balayages par de l'azote, puis refroidi à 15°C. On y introduit ensuite 2,46 g de peroxydicarbonate de diéthyle dispersés dans 50 ml d'eau à 15°C et 25 g de carbonate de diéthyle. On introduit alors dans l'autoclave 100 g de CTFE puis 900 g de VF₂; la pression dans l'autoclave atteint alors une valeur voisine de 30 bars. L'autoclave est alors mis en chauffe jusqu'à 45°C. Quand cette température est atteinte, on introduit de l'eau sous pression dans l'autoclave jusqu'à ce que la pression dans l'autoclave atteigne 80 bars. Le moment où cette pression est atteinte est considéré comme constituant le moment initial de la copolymérisation. La chute de pression marque alors la progression de la copolymérisation. Après 3 heures 15 min de marche, la température est portée à 50°C, puis après 1h45 min supplémentaires, à 60°C et y est maintenue pendant 1 heure. Après 6 heures de marche, la pression résiduaire dans l'autoclave est de 16 bars. On refroidit l'autoclave à la température ambiante, puis on dégaze les monomères non convertis. Après lavage, essorage et séchage, on recueille 930 g de copolymère dont la teneur en CTFE mesurée par dosage du chlore est de 10,8 % en poids (taux de conversion : 93 %) et qui présente un indice de fluidité (MI) mesuré à 230°C sous une charge de 5 kg selon la norme ASTM D 1238 de 14g/10 min.

### Exemples 2 à 4

On procède comme à l'exemple 1 si ce n'est qu'on modifie la composition du mélange des monomères mis en oeuvre en respectant une charge totale de 1 kg de monomères pour produire les copolymères hétérogènes décrits ci-dessous.

| | CTFE mis en oeuvre, % pds total monomères | Copolymère VF2-CTFE teneur en CTFE, % pds | MI, g/10min |
|---|---|---|---|
| exemple 2 | 15 | 15,1 | 14 |
| exemple 3 | 16 | 16,3 | 14,5 |
| exemple 4 | 20 | 20,3 | 16,5 |

Sur les copolymères hétérogènes de VF₂-CTFE produits aux exemples 1 à 4, on a évalué la température de fusion (T_{f}) par analyse thermique différentielle, le module d'élasticité en flexion (E _{flex}) selon la norme ASTM D 790 et la température de fragilisation (T_{F}) selon la norme ASTM D 746 A. Les résultats de l'évaluation sont consignés dans le Tableau en annexe.

On a par ailleurs évalué la teneur en nodules élastomériques des matériaux plastiques formés des copolymères hétérogènes produits aux exemples 1 et 2. Pour ce faire, on a pratiqué des coupes microtomiques de 0,1 µm d'épaisseur sur des granules de copolymères. Ces coupes ont été trempées pendant 16 heures à température ambiante dans de la méthyléthylcétone. Après trempage on a visualisé, par microscopie électronique, les nodules élastomériques dissous constitués essentiellement de copolymères hétérogènes riches en CTFE et la phase continue cristalline non dissoute constituée de quasi polymère du fluorure de vinylidène. La fraction volumique des nodules élastomériques a été évaluée par analyse d'image (digitalisation) des micrographies réalisées avec un grossisement de 40.000. La micrographie 1 en annexe se rapporte au matériau plastique selon l'exemple 1, la micrographie 2 se rapporte au matériau plastique selon l'exemple 2. La fraction massique des nodules élastomériques étant assimilée à la fraction volumique évaluée, la teneur pondérale en nodules élastomériques du matériau plastique selon l'exemple 1 s'élève à 62-58 % en poids; celle du matériau plastique selon l'exemple 2 à 70-66 % en poids.

**TABLEAU**

| Evaluation des propriétés des copolymères | | | | |
|---|---|---|---|---|
| N° de l'exemple | Teneur en CTFE, % en poids | Tf, °C | E flex, MPa | TF, °C |
| 1 | 10,8 | 170 | 850 | -25 |
| 2 | 15,1 | 168 | 400 | -42 |
| 3 | 16,3 | 165,8 | 390 | -42 |
| 4 | 20,3 | 165,2 | 192 | -50 |

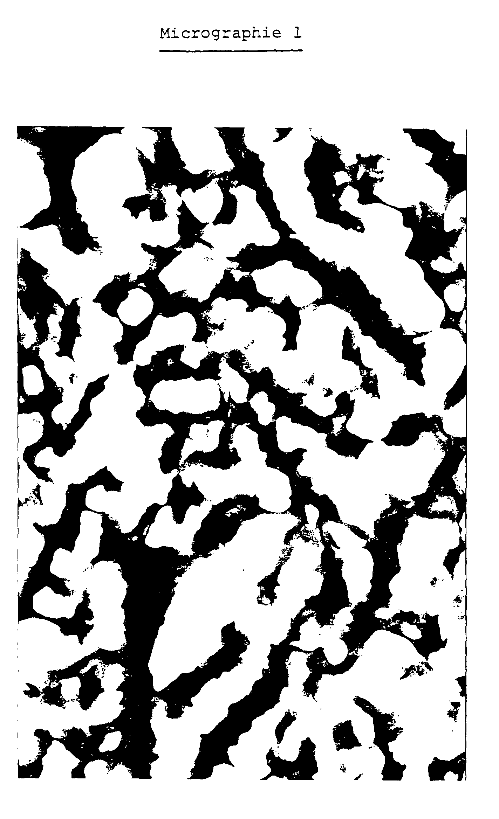

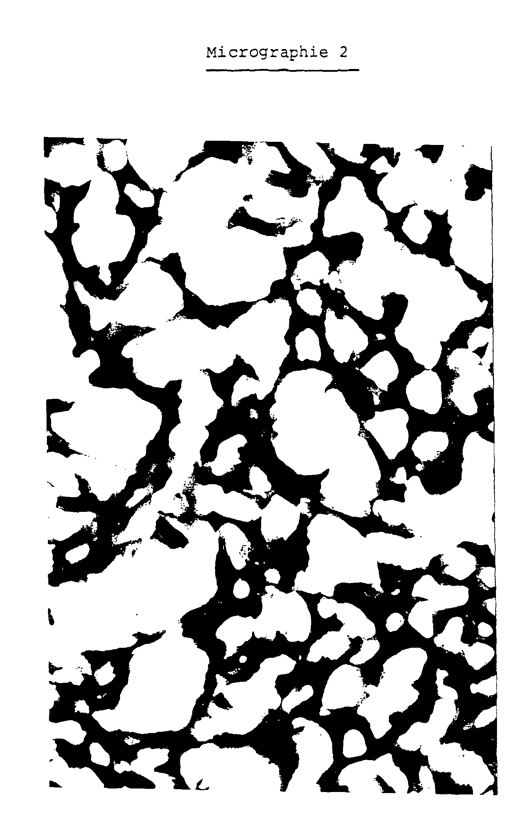

## Revendications

1. Matériaux plastiques formés de copolymères hétérogènes de fluorure de vinylidène et de chlortrifluoréthylène, **caractérisés en ce qu'**ils sont constitués de nodules élastomériques de copolymères hétérogènes de fluorure de vinylidène et de chlortrifluoréthylène, représentant plus de 55 % en poids de la matrice plastique, dispersés dans une phase continue cristalline de quasi polymère de fluorure de vinylidène représentant au moins 10 % en poids du matériau plastique.

2. Matériaux plastiques suivant la revendication 1, **caractérisés en ce que** les nodules élastomériques représentent plus de 60 % en poids du matériau plastique.

3. Matériaux plastiques suivant la revendication 1, **caractérisés en ce que** les nodules élastomériques représentent plus de 65 % en poids du matériau plastique.

4. Matériaux plastiques formés de copolymères hétérogènes de fluorure de vinylidène et de chlortrifluoréthylène contenant globalement de 10 à 22 % en poids environ de chlortrifluoréthylène et présentant une température de fusion déterminée par analyse thermique différentielle au moins égale à 165°C et un module d'élasticité en flexion déterminé selon la norme ASTM D 790 au plus égal à 1000 MPa.

5. Matériaux plastiques suivant la revendication 4, **caractérisés en ce qu'**ils contiennent globalement de 12 à 20 % en poids environ de chlortrifluoréthylène et présentent une température de fusion au moins égale à 165°C et un module d'élasticité en flexion au plus égal à 750 MPa.

6. Matériaux plastiques suivant les revendications 1 ou 4, **caractérisés en ce que** leur module d'élasticité en flexion est au moins égal à 150 MPa.

7. Procédé pour la fabrication de copolymères hétérogènes de fluorure de vinylidène et de chlortrifluoréthylène suivant les revendications 1 ou 4, **caractérisé en ce que** le fluorure de vinylidène et le chlortrifluoréthylène sont copolymérisés en dispersion aqueuse à l'intervention d'initiateurs de polymérisation radicalaire avec mise en oeuvre de la totalité des deux comonomères au départ de la copolymérisation.

8. Procédé pour la fabrication de copolymères hétérogènes suivant la revendication 7, **caractérisé en ce que** le fluorure de vinylidène et le chlortrifluoréthylène sont copolymérisés en suspension aqueuse à l'intervention d'initiateurs oléosolubles de la polymérisation radicalaire et d'agents dispersants.

9. Procédé pour la fabrication de copolymères hétérogènes de fluorure de vinylidène et de chlortrifluoréthylène suivant la revendication 8, **caractérisé en ce que** l'initiateur oléosoluble est choisi parmi les peroxydicarbonates de dialkyles et l'agent dispersant parmi les éthers cellulosiques hydrosolubles.

10. Utilisation des matériaux plastiques suivant les revendications 1 ou 4 pour le gainage de câbles électriques et de fibres optiques.

11. Utilisation des matériaux plastiques suivant les revendications 1 ou 4 pour la fabrication de tubes et de matériaux tubulaires souples destinés à être enroulés.

12. Utilisation des matériaux plastiques suivant les revendications 1 ou 4 pour le revêtement de réservoirs de stockage et de transport.

13. Utilisation des matériaux plastiques suivant les revendications 1 ou 4 pour l'extrusion de films, mono- ou multi-couches, agricoles ou architecturaux.

## Patentansprüche

1. Plastische Materialien, die aus heterogenen Vinylidenfluorid-Chlortrifluorethylen-Copolymeren gebildet werden, **dadurch gekennzeichnet, dass** sie aus elastomeren Knollen aus heterogenen Vinylidenfluorid-Chlortrifluorethylen-Copolymeren, die mehr als 55 Gew.-% der plastischen Matrix darstellen, bestehen, die in einer kristallinen kontinuierlichen Phase aus Quasi-Vinylidenfluoridpolymer, das wenigstens 10 Gew.-% des plastischen Materials darstellt, dispergiert sind.

2. Plastische Materialien gemäß Anspruch 1, **dadurch gekennzeichnet, dass** die elastomeren Knollen mehr als 60 Gew.-% des plastischen Materials darstellen.

3. Plastische Materialien gemäß Anspruch 1, **dadurch gekennzeichnet, dass** die elastomeren Knollen mehr als 65 Gew.-% des plastischen Materials darstellen.

4. Plastische Materialien, die aus heterogenen Vinylidenfluorid-Chlortrifluorethylen-Copolymeren gebildet werden, die insgesamt etwa 10 bis 22 Gew.-% Chlortrifluorethylen enthalten und eine durch differentielle thermische Analyse bestimmte Schmelztemperatur von wenigstens gleich 165 °C und einen gemäß der Norm ASTM D 790 bestimmten Biegemodul von höchstens gleich 1000 MPa aufweisen.

5. Plastische Materialien gemäß Anspruch 4, **dadurch gekennzeichnet, dass** sie insgesamt etwa 12 bis 20 Gew.-% Chlortrifluorethylen enthalten und eine Schmelztemperatur von wenigstens gleich 165 °C und einen Biegemodul von höchstens gleich 750 MPa aufweisen.

6. Plastische Materialien gemäß den Ansprüchen 1 oder 4, **dadurch gekennzeichnet, dass** ihr Biegemodul wenigstens gleich 150 MPa beträgt.

7. Verfahren zur Herstellung von heterogenen Vinylidenfluorid-Chlortrifluorethylen-Copolymeren gemäß den Ansprüchen 1 oder 4, **dadurch gekennzeichnet, dass** das Vinylidenfluorid und das Chlortrifluorethylen in wässriger Dispersion unter Beteiligung von Initiatoren der radikalischen Polymerisation copolymerisiert werden, wobei die Gesamtheit der beiden Comonomere zu Beginn der Copolymerisation eingesetzt wird.

8. Verfahren zur Herstellung von heterogenen Copolymeren gemäß Anspruch 7, **dadurch gekennzeichnet, dass** das Vinylidenfluorid und das Chlortrifluorethylen in wässriger Suspension unter Beteiligung von öllöslichen Initiatoren der radikalischen Polymerisation und Dispersionsmitteln copolymerisiert werden.

9. Verfahren zur Herstellung von heterogenen Vinylidenfluorid-Chlortrifluorethylen-Copolymeren gemäß Anspruch 8, **dadurch gekennzeichnet, dass** der öllösliche Initiator unter den Dialkyl-peroxydicarbonaten und das Dispersionsmittel unter den wasserlöslichen Celluloseethern ausgewählt ist.

10. Verwendung der plastischen Materialien gemäß den Ansprüchen 1 oder 4 für das Umhüllen von elektrischen Kabeln und optischen Fasern.

11. Verwendung der plastischen Materialien gemäß den Ansprüchen 1 oder 4 für die Herstellung von biegsamen Rohren und röhrenförmigen Materialien, die aufgerollt werden sollen.

12. Verwendung der plastischen Materialien gemäß den Ansprüchen 1 oder 4 für die Beschichtung von Lager- und Transportbehältern.

13. Verwendung der plastischen Materialien gemäß den Ansprüchen 1 oder 4 für die Extrusion von Mono- oder Mehrschichtfolien für die Landwirtschaft oder die Architektur.

## Claims

1. Plastic materials made of heterogeneous copolymers of vinylidene fluoride and chlorotrifluoroethylene, **characterised in that** they consist of elastomeric nodules of heterogeneous copolymers of vinylidene fluoride and chlorotrifluoroethylene, representing more than 55 % by weight of the plastic matrix, which are dispersed in a crystalline continuous phase of quasi vinylidene fluoride polymer representing at least 10 % by weight of the plastic material.

2. Plastic materials according to Claim 1, **characterised in that** the elastomeric nodules represent more than 60 % by weight of the plastic material.

3. Plastic materials according to Claim 1, **characterised in that** the elastomeric nodules represent more than 65 % by weight of the plastic material.

4. Plastic materials made of heterogeneous copolymers of vinylidene fluoride and chlorotrifluoroethylene containing overall approximately from 10 to 22% by weight of chlorotrifluoroethylene and exhibiting a melting temperature, determined by differential thermal analysis, of at least 165°C and a flexural elasticity modulus, determined according to ASTM standard D790, of not more than 1000 MPa.

5. Plastic materials according to Claim 4, **characterised in that** they contain overall approximately from 12 to 20 % by weight of chlorotrifluoroethylene and exhibit a melting temperature of at least 165°C and a flexural elasticity modulus of not more than 750 MPa.

6. Plastic materials according to Claim 1 or 4, **characterised in that** their flexural elasticity modulus is at least 150 MPa.

7. Process for the manufacture of heterogeneous copolymers of vinylidene fluoride and chlorotrifluoroethylene according to Claim 1 or 4, **characterised in that** vinylidene fluoride and chlorotrifluoroethylene are copolymerised in aqueous dispersion with the use of radical polymerisation initiators, all of the two comonomers being introduced at the beginning of the copolymerisation.

8. Process for the manufacture of heterogeneous copolymers according to Claim 7, **characterised in that** vinylidene fluoride and chlorotrifluoroethylene are copolymerised in aqueous suspension with the use of oil-soluble initiators of radical polymerisation and of dispersing agents.

9. Process for the manufacture of heterogeneous copolymers of vinylidene fluoride and chlorotrifluoroethylene according to Claim 8, **characterised in that** the oil-soluble initiator is chosen from dialkyl peroxydicarbonates and the dispersing agent from watersoluble cellulose ethers.

10. Use of the plastic materials according to Claim 1 or 4 for sheathing electrical cables and optical fibres.

11. Use of the plastic materials according to Claim 1 or 4 for the manufacture of pipes and of flexible tubular materials intended to be wound.

12. Use of the plastic materials according to Claim 1 or 4 for coating storage and transport containers.

13. Use of the plastic materials according to Claim 1 or 4 for the extrusion of agricultural or architectural single- or multilayer films.
